# EUROPÄISCHE PATENTANMELDUNG

(11) **EP 1 313 301 A1**
(43) Veröffentlichungstag der Anmeldung: **21.05.2003**
(21) Anmeldenummer: 01127293.7
(22) Anmeldetag: 16.11.2001
(51) Int. Cl.: H04M 3/56, H04L 12/18

(54) **Multimediales Kommunikationssystem mit aktivierbaren Zusatzdiensten während einer Konferenz**

(71) Anmelder: Siemens Schweiz AG, 8047 Zürich (CH)
(72) Erfinder: Gehne, Claus, 83607 Holzkirchen (DE); Baker, Shaun, 8044 Zürich (CH)
(74) Vertreter: Fischer, Michael, Dr.

(57) **Zusammenfassung**

Ein modulares multimediales Kommunikationssystem innerhalb eines Netzwerkes, soll auf einfache Weise die Implementierung von Zusatzdiensten erlauben und diese Zusatzdienste sollen von den Teilnehmern auf einfache Weise aktiviert werden können. Ueber das multimediales Kommunikationssystem sind Terminals miteinander verbindbar. Das Kommunikationssystem enthält wenigstens einen Kommunikationsserver (1) und wenigstens einem weiteren Server (2), auf dem Applikationen ablaufen. Potentielle und tatsächliche Teilnehmer (10) mit einer Zuordnung zu Terminals werden in einer Datenbank (DB) geführt. Zu einem aktivierten Dienst ist ein Zusatzdienst (Suppl_Serv) durch eine weitere Applikation (21) aktivierbar, die auf dem wenigstens einen weiteren Server (2) vorgesehen ist. Die weitere Applikation (21) für die Aktivierung des Zusatzdienstes (Suppl_Serv) hat auf in der Datenbank (DB) geführte Daten Zugriff, die Eigenschaften der tatsächlichen Teilnehmer (10) beinhalten.

## Beschreibung

Die vorliegende Erfindung betrifft ein Multimediales Kommunikationssystems mit aktivierbaren Zusatzdiensten nach dem Oberbegriff des Patentanspruches 1.

In [1] sind unter dem Abschnitt 6 "Umgebungen für eine virtuelle Realität" Videokonferenz- und "Internet Chat"-Plattformen aufgeführt. Beispielsweise erlaubt ein Internet-Relay-Chat (IRC) mit dem Einsatz von zentralen Servern, Konferenzsysteme zu bilden, bei denen sich die Konferenzteilnehmer gemäss der persönlichen Interessenlage zusammensetzen und über in dieser Schrift als Nachrichtenserver genannten Dienst kann festgestellt werden, welche einmal bekannten Konferenzteilnehmer zu einem bestimmten Zeitpunkt im Internet aktiv (=präsent) sind. Auf diese Weise können in einem Chat beteiligte Konferenzteilnehmer Kontakt zu anderen zur Zeit adressier- und erreichbaren Teilnehmern aufbauen.

In EP 1 077 565 A1 ist eine "Multipoint Control Unit" (MCU) für ein multimediales Konferenzsystem offenbart, bei dem die für die verschiedenen Teilnehmer erforderlichen Konversionen mittels "Codecs" minimiert werden bzw. bei Eintritt eines weiteren Teilnehmers neu ausgehandelt werden können.

Für eine Implementierung von multimedialen Konferenzsystemen auf der Basis eines unternehmensweiten wie auch eines unternehmensüberreifenden Netzwerkes wird vorzugsweise das Protokoll SIP eingesetzt. So ist in WO 00/79756 A2 ein System und ein Verfahren für die Erbringung eines Mehrwertdienstes in einem integrierten Telekommunikationsnetz offenbart, wobei auf der einen Seite die Protokolle SIP und auf der Netzseite das Protokoll INAP für die Mehrwertdienste eingesetzt sind.

Unabhängig von der Art der Terminals der betreffenden Konferenzteilnehmer - wie z.B. Personalcomputer mit Browser oder ein gewöhnliches Mobiltelefon - besteht das Bedürfnis, nebst der mono- und/oder multimedialen Konferenz zusätzliche Dienste beanspruchen zu können. Ein solcher Zusatzdienst kann beispielsweise eine einfache Feststellung und damit Hinzuschaltung potentieller weiterer Konferenzteilnehmern beinhalten. Ebenso könnte mit einem Zusatzdienst zwei Konferenzteilnehmern erlaubt werden ausserhalb der Konferenz eine Punkt-Punkt-Verbindung zu etablieren können, ohne dass die verbleibenden Konferenzteilnehmer Kenntnis von der Existenz und vom Inhalt der genannten Punkt-Punkt-Verbindung erhalten.

Der vorliegenden Erfindung liegt daher die Aufgabe zugrunde, ein modulares multimediales Kommunikationssystem innerhalb eines Netzwerkes, insbesondere ein Konferenzsystem anzugeben, dass auf einfache Weise die Implementierung von Zusatzdiensten erlaubt und dessen Zusatzdienste von den Teilnehmern auf einfache Weise aktiviert werden können.

Diese Aufgabe wird durch die im Patentanspruch 1 angegebenen Massnahmen gelöst. Vorteilhafte Ausgestaltungen der Erfindung sind in weiteren Ansprüchen angegeben.

Durch das Multimediale Kommunikationssystem, wonach zu einem aktivierten Dienst ein Zusatzdienst durch eine weitere Applikation aktivierbar ist, die auf dem wenigstens einen weiteren Server vorgesehen ist, wobei die weitere Applikation für die Aktivierung des Zusatzdienstes auf in der Datenbank geführte Daten Zugriff hat, die Eigenschaften der tatsächlichen Teilnehmer beinhalten;
können Zusatzdienste ohne grundlegenden Eingriffe in einem vorhandenen Kommunikationssysteme implementiert werden. Bei einer Web-basierten Implementierung können diese Zusatzdienste von den Teilnehmern bzw. von den Clients aus auf einfache Weise aktiviert werden.

So können sich die folgenden Vorteile zusätzlich ergeben:
i) Dadurch dass
   ein zu einem aktivierten Dienst aktivierter Zusatzdienst auf einem anderen Terminal nutzbar ist;
   können neue Zusatzdienste wie z.B. eine Punkt-Punkt-Verbindung zweier Konferenzteilnehmer so realisiert werden, dass ein Konferenzteilnehmer sich physisch oder logisch für eine Rücksprache mit einem anderen Konferenzteilnehmer entfernt, ohne dass die übrigen Konferenzteilnehmer dies bemerken können (Patentanspruch 2).
ii) Dadurch dass
   ein Zusatzdienst abhängig von der Anwesenheit eines Teilnehmers (10) an einem vorgesehenen Terminal oder zeitgesteuert aktiviert wird;
   können mit einem solchen Zusatzdienst nur zutreffende und aktuelle Meldungen an Teilnehmer versandt werden, eine Belästigung von Teilnehmern mit unzutreffenden oder nicht oder nicht mehr aktuellen Meldungen wird so vermieden. (Patentanspruch 3).
iii) Dadurch dass
   Terminals unterschiedlicher Zugangstechnologien über Gateways mit dem Kommunikationssystem verbindbar sind und dass die Aktivierung eines Zusatzdienstes abhängig vom Typ des adressierten Terminals ist;
   wird sichergestellt, dass ein Zusatzdienst auch an Terminals nutzbar ist, die nicht direkt am Kommunikationssystem angeschlossen sind und dass ein Zusatzdienst an die medialen und funktionellen Leistungsmerkmale eines Terminals angepasst ist (Patentanspruch 4).
iv) Dadurch dass
   die weitere Applikation auf mehreren Applikationsservern vorgesehen ist und auf diesen Applikationsservern parallel abläuft;
   wird die Verfügbarkeit von Zusatzdiensten durch eine redundante Infrastruktur erhöht (Patentanspruch 5).
v) Dadurch dass
   dass die weitere Applikation verteilt auf mehreren Applikationsservern vorgesehen ist;
   ergibt sich eine automatisierte Lastverteilung auf die mehreren Applikationsserver und verkürzt dadurch die Zeit, bis ein Zusatzdienst mittels einer gestarteten Applikation aktiviert ist (Patentanspruch 6).

Die Erfindung wird nachfolgend anhand der Zeichnung beispielsweise näher erläutert. Dabei zeigen:
- Figur 1: Zusatzdienst Punkt-Punkt-Verbindung innerhalb des Dienstes multimediale Konferenz;
- Figur 2: Einbindung eines Präsenz-Servers und einer Applikation zur Erbringung eines Zusatzdienstes innerhalb eines multimedialen Kommunikationssystems;

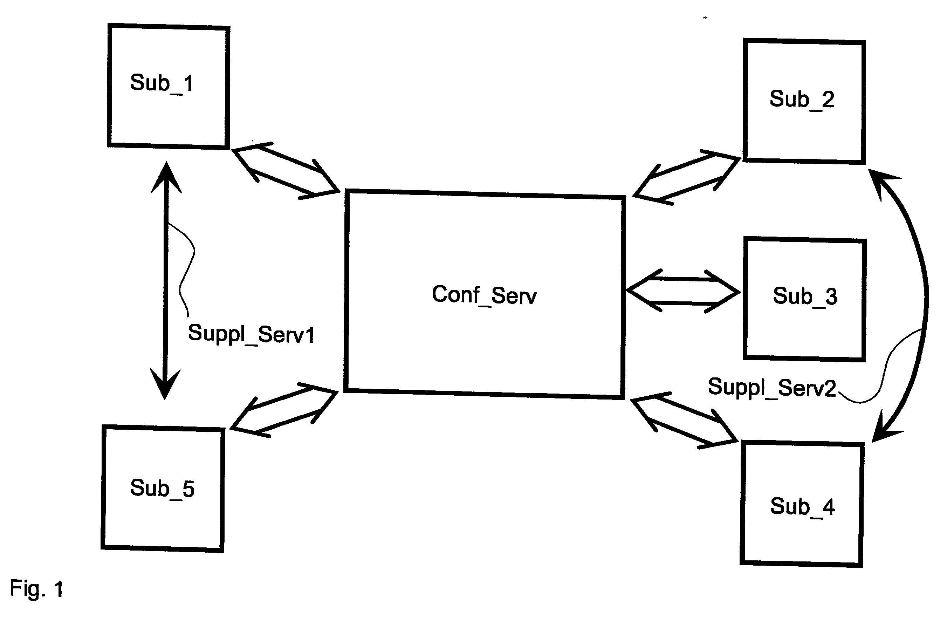

Die Erfindung wird anhand des Zusatzdienstes "zusätzliche Punkt-Punkt-Verbindung" zweier aktiver Konferenzteilnehmer beispielhaft erläutert: Dieser Zusatzdienst wird auch "Instant Messaging Conference Side-Channels" genannt. Die Figur 1 zeigt den Zusatzdienst Supp1_Serv1, Supp1_Serv2 in zwei Inkarnationen innerhalb einer etablierten Konferenz Conf_Serv mit den Konferenzteilnehmern Sub1, .., Sub5. Je nach Kontext können die Konferenzteilnehmer als sogenannte Clients oder als über ein Gateway mit dem Kommunikationssystem verbundenen oder verbindbaren Geräte angesehen werden. Der Zusatzdienst "zusätzliche Punkt-Punkt-Verbindung" am Beispiel der beiden Teilnehmer Sub1 und Sub5 wird gemäss der nachfolgenden Erläuterung aktiviert. Dabei wird unterstellt, dass die beiden Teilnehmer als Clients an der genannten Konferenz zugeschaltet sind: Person Sub1 öffnet mit Hilfe des Clients eine Session Chatboard und wählt als Kommunikationspartner den Teilnehmer Sub5 (=Adresse) aus. Beim Client Sub5 der betreffenden Person öffnet sich ein Fenster und die betreffende Person kann die Textnachricht lesen und allenfalls eine Antwort an den Teilnehmer Sub1 richten. Die übrigen Konferenzteilnehmer bemerken diese zusätzliche

Verbindung nicht. Denkbar ist auch, die genannte Verbindung als Sprachverbindung zu wählen, dies bedingt entweder ein anderes Medium für die Konferenz der Sprache oder das sich der betreffende Teilnehmer für die Durchgabe seiner Mitteilung temporär für einige Sekunden von der Konferenz abschaltet (Park).

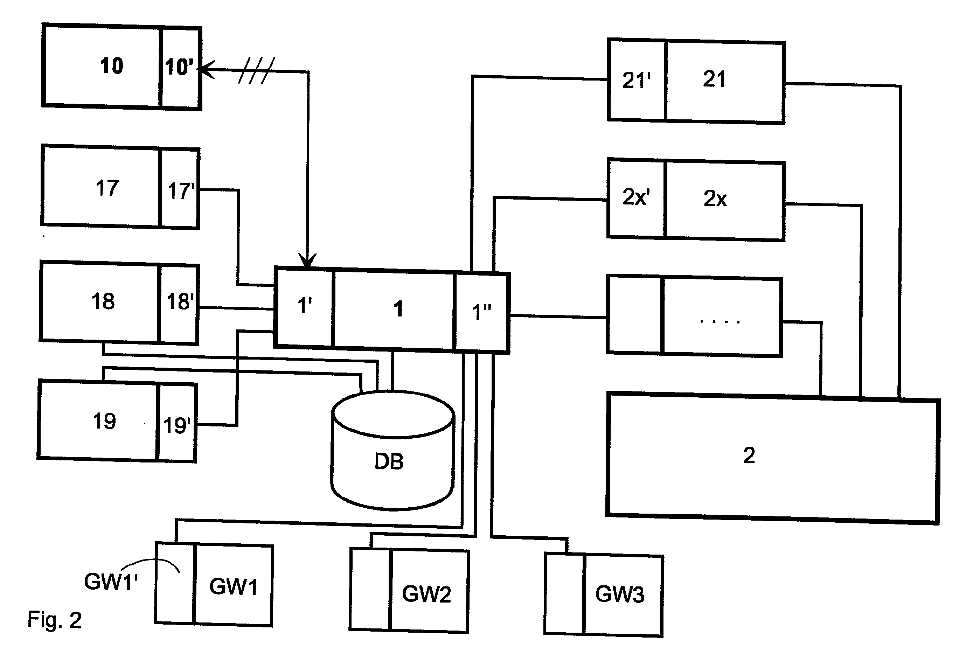

Anhand der Figur 2 wird die Implementierung eines solchen Zusatzdienstes in einem multimedialen Kommunikationssystem erläutert. Fig. 2 zeigt dessen Struktur mit einem Kommunikationsserver 1, an den über ein sogenanntes Webinterfaces 1' mehrere Clients 10 angeschlossen sind, dabei ist in Fig. 1 nur ein Client 10 dargestellt. Das genannte Kommunikationssystem basiert signalisierungsmässig auf dem Protokoll SIP, das der Anwendungsschicht zugeordnet ist. Die darunterliegende Transportschicht ist für die Signalisierung auf der Basis TCP und für den Inhalt UDP. Die Grundlagen dieses Protokolls können den Schriften [2] und [3] entnommen werden. Die Plattform, auf der ein SIP-Client oder eine SIP-Client-Applikation abläuft, heisst User Agent UA. In dieser Schrift wird dazu generell der Begriff Terminal verwendet, so dass unter einem Terminal jedwelches Gerät für eine Interaktion Mensch-Maschine verstanden wird.

Da die in Kommunikationsnetzen eingesetzten Protokolle und/oder Zugangstechnologien in der Regel nicht einheitlich sind, müssen entsprechend der Art der Protokolle und/oder der Zugangstechnologie sogenannte SIP-Gateways GW1, GW2, usw. vorgesehen werden. Beispielsweise können die Gateways Uebergänge zu folgenden Protokollen oder Netzen herstellen:
- GW1: Gateway SIP - PABX, PABX bezeichnet eine Nebenstellenanlage;
- GW2: Gateway SIP - PSTN/ISDN;
- GW3: Gateway SIP H.323.

Für das Gateway GW1 wird vorzugsweise das Signalisierungsprotokoll CSTA eingesetzt, es kann aber auch ein anderes Protokoll verwendet werden, dass sinnvollerweise eine Kommunikation mit einer Nebenstellenanlage PABX ermöglicht. Die Gateways GW1, GW2 sind als logische Gateways zu verstehen, die ein Signalling Gateway und ein Media Gateway enthalten.

Im Kommunikationsserver 1 werden anhand der Registrierung der jeweiligen Clients/Teilnehmer die Dienste für das WEB-Interface zusammengestellt. So ist gewährleistet, dass für jede Nutzung die aktuellen Verknüpfungen zu den zugewiesenen Diensten hergestellt wird. Aenderungen des Diensteumfanges werden mit diesem Mechanismus in einem Aktualisierungsschritt für den Client 10 (Teilnehmerinterface) wirksam.

Der Register-Server 18 verwaltet die zu den Teilnehmern bzw. Clients 10 zugehörigen IP-Adressen, wobei die Teilnehmer durch eine sogenannte SIP URL definiert sind. Jeder Client 10 hat eine eindeutige SIP URL. Das kann beispielsweise die bekannte E-Mailadresse sein, die im heutigen Geschäftsumfeld bekannt und vorhanden ist. Diese E-Mailadresse ist für dieses System einzigartig. Des weiteren kann jeder Benutzer/Teilnehmer eine Anzahl sogenannter "Aliases" in seinem Profil definieren, die auf diese Weise definierten und identifizierten Teilnehmer werden im Kontext dieser Schrift als potentielle Teilnehmer bezeichnet. Dieses kann z.B. auch eine Telefonnummer beinhalten. Das führt zu einer erleichterten Eingabe an einem Telefonendgerät, wenn ein solcher Alias zum Verbindungsaufbau verwendet wird, das heisst hinter der "Telefonnummer" kann z.B. eine E-Mailadresse stecken. Diese Zuordnungen werden in der zentralen Datenbank gespeichert. Diese Datenbank DB wird vom Kommunikationsserver 1 verwaltet. In Figur 2 steht das Gefäss DB logisch für eine oder allenfalls mehrerer solcher Datenbanken DB. Der jeweilige Client 10 hat auf Administratorenlevel einen Zugriff auf die Datenbank DB, um die erwähnten Zuordnungen vorzunehmen.

Durch den Präsenzserver 19 werden die momentanen Aufenthaltsorte ("locations") der durch den Register-Server 18 registrierten Teilnehmer ermittelt und in der Datenbank DB gespeichert. Je nach Implementierung ist es auch möglich, die vom Register-Server 18 und vom Präsenzserver 19 ermittelten Daten in einer einzigen Datenbank DB zu halten. Der dadurch adressier- und erreichbare Teilnehmer wird im Kontext dieser Schrift auch "tatsächlicher" Teilnehmer genannt. Zusätzlich zum momentanen Aufenthaltsort ("locations") werden in der Datenbank weitere Attribute zu den Teilnehmern geführt, wie z.B. eine Gruppenzugehörigkeit. Die Gesamtheit dieser Attribute werden in dieser Schrift als "Eigenschaften" bezeichnet.

Der eingangs genannte Konferenzdienst Conv_Serv läuft als Applikation 21 auf dem Applikationsserver 2. Der Zusatzdienst "Instant Messaging Conference Side-Channels" wird von einem Client 10, d.h. Teilnehmer Sub1 mit einer Meldung INVITE an den SIP-Proxy-Server 17 wie nachfolgend aufgeführt initiiert.
INVITE sip:Sub5@confserv.com
via: SIP/2.0/UDP 10.10.15.62:5090
to: sip:Sub5@confserv.com
from: A.N. Other <sip:Sub1@confserv.com>
Call-ID: f6-32-9a-34-91-e7@confserv.com
Cseq: 1768 INVITE
Subject: Private Side-Channel
Contact: sip:Sub1@confserv.com
Content-Type: application/sdp
Content-Length: 137

Während im vorstehenden Beispiel angenommen wurde, dass die betreffenden Personen an sogenannten SIP-Clients eine Konferenz aufgebaut haben, wird der Zusatzdienst "Instant Message Conference Side Channels" noch an einem "inhomogen" Fall erläutert. Es wird angenommen, dass der Teilnehmer Sub5 an einem Komforttelefonapparat sitzt, der an einer Nebenstellenanlage PABX angeschlossen ist, die ihrerseits über das Gateway GW1 mit dem SIP-basierenden Kommunikationssystem verbunden ist. Der Meldefluss ist ein INVITE an den SIP-Proxy-Server 17.

Die Meldung INVITE unterscheidet sich von der vorgenannten in einzelnen Parametern und Parameterwerten. Mit einem Alias kann angegeben werden, dass eine Parallelverbindung (Side-Channel) zu einem an einer Nebenstellenanlage PABX angeschlossen Endgerät aufgebaut werden soll. Die Meldung INVITE ist unabhängig davon, an welchem Netzwerk der Teilnehmer Sub5 erreichbar ist. Der rufende Teilnehmer Sub1 braucht sich um diese netzwerkspezifisches Detail nicht zu kümmern. Der Proxy-Server 17 ändert die Anfrage von Teilnehmer Sub1 und bildet die Netzwerkadresse - in diesem Beispiel eine E.164 Nummer, das ist eine "gewöhnliche Telefonnummer" - auf die SIP URL von Teilnehmer Sub5 ab. Die resultierende Meldung INVITE sieht dann wie folgt aus:
INVITE sip:+4114956754@gw1.com SIP/2.0
via: SIP/2.0/UDP 10.10.15:90 (i.e. this is the Proxy)
via: SIP/2.0/UDP 10.10.15.62:5090
to: sip:Sub5@confserv.com
from: A.N. Other <sip:Sub1@confserv.com>
Call-ID: f6-32-9a-34-91-e7@confserv.com
Cseq: 1768 INVITE
Subject: Private Side-Channel
Contact: sip:Sub1@confserv.com
Content-Type: application/sdp
Content-Length: 137

Vom SIP-Proxy-Server 17 erfolgt eine Anfrage an der Register-Server 18 für die entsprechende Adressauflösung. Der Register-Server 18 schliesslich holt die korrespondierende Netzadresse aus der entsprechenden Datenbank DB und gibt diese an den SIP-Proxy-Server 17. Die INVITE-Meldung wird mit der aufgelösten Adresse versehen und dementsprechend wird die INVITE-Meldung an das Gateway GW1 weitergeleitet. Das Gateway GW1 übersetzt die INVITE-Meldung in eine PABX-konforme Meldung, die in der Regel als setup-message bezeichnet wird.

Wenn das durch die vorgenannte Netzadresse (eine E.164-Nummer) identifizierte Endgerät erreichbar ist wird von diesem Bestätigungsnachricht zurück an den Client 10 geschickt und nach einem weiteren Paketaustausch wird eine Punkt zu Punkt Verbindung aufgebaut. Dabei erfolgt die Protokollumwandlung für die Signalisierung im vorerwähnten Signalling Gateway und für die Nutzinformation (=Sprache) im vorerwähnten Media-Gateway, die je als Komponente im Gateway GW1 enthalten sind.

Mit der erfindungsgemässen Aktivierung von Zusatzdiensten mittels weiterer eigenständiger Applikationen ergibt sich eine Skalierbarkeit in zweifacher Hinsicht:
i) Eine einzelne Applikationen können auf mehrere Server verteilt werden;
ii) es können zu einem Dienst bzw. Zusatzdienst mehrere parallel laufende Applikation auf verschiedenen Server gestartet werden, die aber für den jeweiligen Benutzer transparent sind; dadurch ergibt sich eine Redundanz, so dass bei Ausfall eines Servers oder bei einer Inkonsistenz der Daten bei einer Applikation der Dienst für den Client 10 trotzdem erbracht werden kann.

Die erfindungsgemässe Aktivierung von Zusatzdiensten als zusätzliche auf einem Applikationsserver 2 gestartete bzw. ablaufende Applikation zu einem bereits aktiven Dienst kann beispielsweise auch angewendet werden für:
i) Visualisierung der Präsenzinformation für eine definierte Teilnehmergruppe (sog. presence based buddylist).
ii) Visualisierung der Präsenz von Wissensträgern mit der Möglichkeit, durch Anklicken eines sogenannten Links direkt eine Verbindung herzustellen ("click to dial"): Zu bestimmten Sachgebieten die z.B. produkt-, organisations- oder kundenbezogen sein können, erfolgt eine dynamische Zuordnung von Personen gemäss einem definierten Profil. Die dynamische Zuordnung erfolgt dabei mittels der Nachführung der Datenbank DB durch den Präsenzserver(sog. application voice enabling).
iii) Zu einer geplanten Konferenz über das multimediale Kommunikationssystem kann vorgesehen werden, dass die vorgesehenen Konferenzteilnehmer/Clients z.B. automatisch 10 Minuten vor dem Beginn der Konferenz eine Nachricht erhalten, falls sie sich zum genannten Zeitpunkt noch nicht an einem vorgesehen Typ eines Terminals, z.B. multimedialer Personalcomputer, angemeldet haben. In einer weiteren Ausprägung kann eine berechtigte Person (Konferenzleiter) die zu Konferenzbeginn zwar erreichbaren Personen, die jedoch nicht über dsd vorgesehene multimediale Terminal erreichbar sind, mit einer Meldung auf die vorgesehene Konferenz aufmerksam machen (sog. intelligent conferencing with scheduler and mail break out services).
iv) Der eigentlich bekannte Zusatzdienst eines Anrufbeantworters kann abhängig von der Identität des Anrufers oder durch eine Interaktion der angerufenen Person durch Aufzeichnung einer gesprochenen Nachricht kontextabhängig gestartet werden. Dies geschieht mit mit dem erfindungsgemässen Starten einer weiteren Applikation 2x auf dem Applikationsserver ("voice to mail").
v) Nach erfolgter Feststellung, dass sich ein bestimmter Teilnehmer/Client 10 über ein Terminal am erfindungsgemässen Kommunikationssystem angemeldet hat, kann der betreffende Teilnehmer mit einer bestimmten Information versehen werden (sog. web break out service with web content and/or web link).

Die vorliegende Erfindung kann sowohl für sogenannte Unternehmensnetzwerke als auch für Zusatzdienste eines landesweit oder global tätigen Netzbetreibers angewendet werden. Für den

Einsatz bei einem Netzbetreiber sind zusätzliche Steuerungsinformationen notwendig, ob die Terminierung des Zusatzdienstes feststellen zu können, damit bei einer zeitbasierten Verrechnung eine korrekte Rechnungsstellung (Billing) ermöglicht wird. Die Datenhaltung der zusätzlichen Steuerungsinformationen erfolgt vorzugsweise in der oder einer der Datenbanken DB, die Nachführung/Administrierung dieser Daten erfolgt durch den Präsenz-Server 19.

### Liste der verwendeten Bezugszeichen und Abkürzungen

- 1: Kommunikationsserver
- 1', 1'': Web-Interface zum Kommunikationsserver
- 2: Applikationsserver
- 10: Client, "Teilnehmer"
- 10': Web-Interface zum Client
- 17: SIP-Proxy-Server
- 17': Web-Interface zu SIP-Proxy
- 18: Register-Server
- 18': Web-Interface zu Register-Server
- 19: Präsenz-Server
- 19': Web-Interface zu Präsenz-Server
- 21, 21' 2x, 2x': Applikation und Web-Interface zur Applikation
- Conf_Serv: Konferenzdienst, conference service
- CSTA: Computer Supported Telecommunication Applications
- DB: Datenbank, Datenbasis
- GW1: Gateway SIP - PABX
- GW2: Gateway SIP - PSTN/ISDN
- GW3: Gateway SIP H.323
- IRC: Internet-Relay-Chat
- MCU: Multipoint Control Unit
- PABX: Private Automatic Branch Exchange; Nebenstellenanlage
- SIP: Session Initiated Protocol gemäss IETF RFC 2543

### Literaturangaben

[1] "Der Fernmeldeingenieur" 3/'01
   Bericht über eine Internationale Konferenz "Zukunft der Medien"
   Verlag für Wissenschaft und Leben Georg Heidecker GmbH, DE - Erlangen
[2] Internet Engineering Task Force: RFC 2543
[3] SIP Understanding the Session Initiation Protocol Alan B. Johnson, Artech House Boston, London, 2001 ISBN 1-58053-168-7

## Patentansprüche

1. Multimediales Kommunikationssystem mit aktivierbaren Diensten, über das Terminals miteinander verbindbar sind und an denen Dienste nutzbar sind, wobei das Kommunikationssystem gebildet wird aus einem Kommunikationsserver (1) und wenigstens einem weiteren Server (2), auf dem Applikationen (21, 2x) ablaufen und wobei potentielle und/oder tatsächliche Teilnehmer (10) mit einer Zuordnung zu Terminals in einer Datenbank (DB) geführt worden,
**dadurch gekennzeichnet dass**
zu einem aktivierten Dienst (Conf_Serv) ein Zusatzdienst (Suppl_Serv) durch eine weitere Applikation (21, 2x) aktivierbar ist, die auf dem wenigstens einen weiteren Server (2) vorgesehen ist, wobei die weitere Applikation (21, 2x) für die Aktivierung des Zusatzdienstes (Suppl_Serv) auf in der Datenbank (DB) geführte Daten Zugriff hat, die Eigenschaften der tatsächlichen Teilnehmer (10) beinhalten.

2. Kommunikationssystem nach Anspruch 1,
**dadurch gekennzeichnet, dass**
ein zu einem aktivierten Dienst (Conf_Serv) aktivierter Zusatzdienst (Suppl_Serv) auf einem anderen Terminal nutzbar ist.

3. Kommunikationssystem nach Anspruch 1 oder 2,
**dadurch gekennzeichnet, dass**
ein Zusatzdienst (Suppl_Serv) abhängig von der Anwesenheit eines Teilnehmers (10) an einem vorgesehenen Terminal oder zeitgesteuert aktiviert wird.

4. Kommunikationssystem nach einem der Ansprüche 1 bis 3,
**dadurch gekennzeichnet, dass**
Terminals unterschiedlicher Zugangstechnologien über Gateways (GW1, GW2, ..) mit dem Kommunikationssystem verbindbar sind und dass die Aktivierung eines Zusatzdienstes (Suppl_Serv) abhängig vom Typ des adressierten Terminals ist.

5. Kommunikationssystem nach einem der Ansprüche 1 bis 4,
**dadurch gekennzeichnet, dass**
dass die weitere Applikation (21, 2x) auf mehreren Applikationsservern (2) vorgesehen ist und auf diesen Applikationsservern (2) parallel abläuft.

6. Kommunikationssystem nach einem der Ansprüche 1 bis 4,
**dadurch gekennzeichnet, dass**
dass die weitere Applikation (21, 2x) verteilt auf mehreren Applikationsservern (2) vorgesehen ist.

7. Kommunikationssystem nach einem der Ansprüche 1 bis 6,
**dadurch gekennzeichnet, dass**
innerhalb des Kommunikationssystems das Protokoll SIP eingesetzt wird.
